# EUROPÄISCHE PATENTSCHRIFT

(11) **EP 0 286 045 B1**
(45) Veröffentlichungstag und Bekanntmachung des Hinweises auf die Patenterteilung: **28.12.1994**
(21) Anmeldenummer: 88105359.9
(22) Anmeldetag: 02.04.1988
(51) Int. Cl.: H04N 5/782, H04N 9/84

(54) **Videorecorder mit Standard- und Langzeitbetrieb**
Video recorder with standard and long-play modes
Enregistreur avec des modes de reproduction standard et de longue durée

(30) Priorität: 09.04.1987 DE 3711951
(43) Veröffentlichungstag der Anmeldung: 12.10.1988
(73) Patentinhaber: Deutsche Thomson-Brandt GmbH, 78010 Villingen-Schwenningen (DE)
(72) Erfinder: Sowig, Helmut, Dipl.-Ing., D-7730 Villingen (DE)

(56) Entgegenhaltungen:
- DE-A- 1 150 707
- DE-A- 2 551 468
- US-A- 4 633 332

## Beschreibung

Bei Videorecordern nach dem VHS-System werden mit einem rotierenden Kopfrad mit zwei Videoköpfen nacheinander Halbbilder jeweils auf Schrägspuren eines Magnetbandes aufgezeichnet. Die Aufzeichnung erfolgt dabei ohne Zwischenraum, sogenannten Rasen, zwischen den Spuren. Die Spaltbreite des Videokopfes ist größer als die Breite der auf dem Band geschriebenen Spuren. Bei der Aufzeichnung wird also jeweils ein Teil der vorher geschriebenen Spur durch die neue Spur überschrieben.

Bei der Wiedergabe ist also die Spaltbreite des Videokopfes größer als die geometrische Breite der abgetasteten Spuren, so daß der Kopf zwangsläufig auch Signale aus den Nachbarspuren liest und somit ein Übersprechen auftritt. Für das Leuchtdichtesignal wird dieses Übersprechen im wesentlichen durch die entgegengesetzten Azimutwinkel der beiden Videoköpfe verringert. Für den Farbträger, bei dessen Frequenz die durch die unterschiedlichen Azimutwinkel hervorgerufenen Azimutverluste nicht mehr ausreichend wirksam sind, wird das Übersprechen durch sogenannte Kammfilter verringert. Die Kammfilter bewirken eine Addition der Farbträger aus zeitlich aufeinanderfolgenden Zeilen, wodurch sich die Nutzsignalkomponenten addieren und die Übersprechkomponenten einander auslöschen.

Es sind auch Videorecorder bekannt, die zusätzlich zu einem sogenannten Standardbetrieb einen Langzeitbetrieb ermöglichen. Bei dem Langzeitbetrieb erfolgt die Aufzeichnung mit einem zweiten Paar von Videoköpfen, deren Spaltbreite etwa die Hälfte der bei Standardbetrieb ist. Außerdem ist die Längsgeschwindigkeit des Magnetbandes halbiert. Durch diese Lösung kann bei geringfügig verminderter Aufzeichnungsqualität die Spieldauer durch Halbierung der Spurbreite verdoppelt werden.

US-A-4 633 332 zeigt einen Videorecorder mit ersten Köpfen für Standardbetrieb und zweiten Köpfen für Langzeitbetrieb. Bei DE-A-2 551 468 erfolgt die Wiedergabe mit Magnetköpfen, deren Kopfspiegel schmaler sind als die der Aufzeichnungsköpfe.

Der Erfindung liegt die Aufgabe zugrunde, bei einem derartigen Videorecorder mit Standard- und Langzeitbetrieb das Übersprechen bei der Wiedergabe insbesondere für den Farbträger im Standardbetrieb zu vermeiden.

Diese Aufgabe wird durch die im Anspruch 1 beschriebene Erfindung gelöst.

Bei der erfindungsgemäßen Lösung erfolgt also bei Standardbetrieb die Wiedergabe mit den Videoköpfen, die an sich für Standardbetrieb nicht vorgesehen sind und bei der Aufzeichnung in dieser Betriebsart auch nicht verwendet wurden. Es hat sich gezeigt, daß gerade durch diese Art der Wiedergabe mehrere Vorteile insbesondere hinsichtlich des Übersprechens erzielt werden. Dabei wird die Tatsache vorteilhaft ausgenutzt, daß die Spaltbreite der Videoköpfe für Langzeitbetrieb kleiner ist als die Spurbreite bei Standardbetrieb. Die für Langzeitbetrieb vorgesehenen Videoköpfe können also die im Standardbetrieb geschriebenen breiten Spuren für die Wiedergabe so abtasten, daß die Köpfe die Nachbarspuren nicht erfassen und somit das Übersprechen vermieden wird. Das gilt insbesondere für den Farbträger, so daß bei Standardbetrieb auf das bisher verwendete Kammfilter im Weg des Farbträgers bei der Wiedergabe verzichtet werden kann. Das hat den Vorteil, daß die bei PAL-Betrieb durch das Kammfilter bewirkte Verschmelzung der Signale aus den Zeilen 1 und 3, 2 und 4 usw. und die Qualitätsverringerung beim wiederholten Überspielen reduziert werden. Es hat sich gezeigt, daß abgesehen von einer geringen Verringerung des Wiedergabepegels keine nennenswerte Verschlechterung des Störabstandes auftritt. Vielmehr wird sogar die Qualität des wiedergegebe nen Leuchtdichtesignals verbessert. Diese Verbesserungen sind unter Beibehaltung der Kompatibilität zu dem bestehenden System möglich. Bei Geräten mit DTF (Dynamic Track Following), der sogenannten dynamischen Spurnachführung, kann bei Standbildbetrieb und bei geringer Qualitätseinbuße auch bei Suchlauf auf das Kammfilter verzichtet werden, wodurch der Schaltungsaufwand verringert wird. Bei Verzicht auf die Kompatibilität zu bestehenden Systemen (VHS, Beta) kann ggf. auch die bekannte Phasenumschaltung des Farbträgers bei der Aufzeichnung entfallen.

Die Erfindung wird anhand der Zeichnung erläutert. Darin zeigen
- Fig. 1: das Spurmuster bei Standardbetrieb und
- Fig. 2: das Spurmuster bei Langzeitbetrieb.

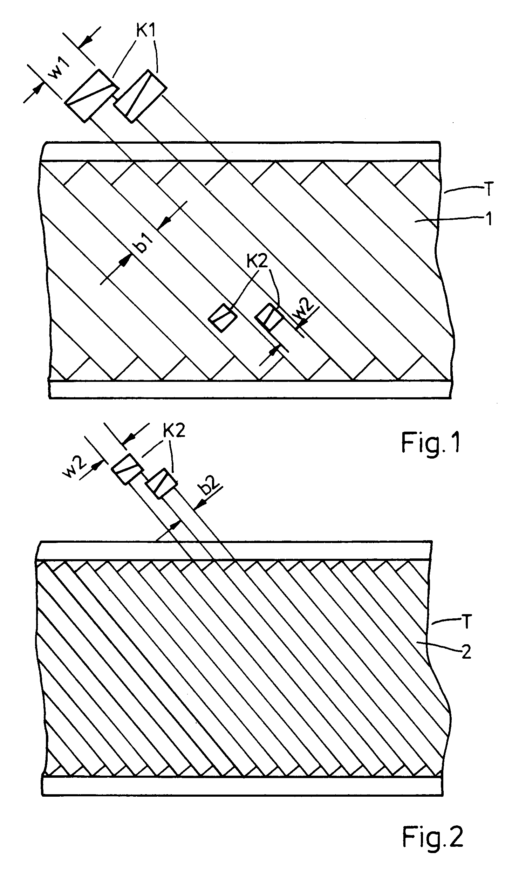

In Fig. 1 sind bei einem Standardbetrieb auf dem Magnetband T Schrägspuren 1 aufgezeichnet. Deren geometrische Breite b1 ist geringer als die Spaltbreite w1 der Videoköpfe K1.

In Fig. 2 sind für einen Langzeitbetrieb auf dem Magnetband T Spuren 2 mit gegenüber b1 halber geometrischer Breite b2 aufgezeichnet, und zwar mit einem zweiten Paar von Videoköpfen K2 mit einer Spaltbreite w2, die ebenfalls größer ist als die Spurbreite b2.

Wie in Fig. 1 dargestellt, erfolgt die Wiedergabe bei Standardbetrieb, also bei Spuren 1 mit der Breite b1, nicht mit den dafür vorgesehenen Videoköpfen K1, sondern mit den an sich für Langzeitbetrieb gemäß Fig. 2 vorgesehenen Videoköpfen K2 mit der geringeren Spaltbreite w2. w2 ist zwar größer als b2, jedoch kleiner als b1. Deshalb können die Videoköpfe K2, wie Fig. 1 zeigt, jeweils die Spuren 1 abtasten, ohne dabei die Nachbarspuren zu erfassen. Die genaue Lage der Köpfe K2 in der Mitte einer Spur 1 kann durch die sogenannte Servoregelung des Kopfrades eingestellt werden. Dadurch, daß die Köpfe K2 die beiden Nachbarspuren nicht mehr erfassen, wird das Übersprechen beträchtlich verringert. Dadurch ergeben sich die bereits beschriebenen Vorteile hinsichtlich der geringen Übersprechdämpfung insbesondere für den abgetasteten Farbträger.

Die beiden Videoköpfe K1 und ebenso K2 haben wie angedeutet durch entgegengesetzte Neigungen der Spalte unterschiedliche Azimutwinkel zur Verringerung des Übersprechens aus den Nachbarspuren. In der Praxis gelten für die in Fig. 1 und 2 dargestellten Teile z.B. folgende Werte:
b1 = 49 µm
b2 = 24,5 µm
w1 = 60 - 80 µm
w2 = 35 µm.

## Patentansprüche

1. Videorecorder mit Standard- und Langzeitbetrieb, bei dem die Spuren (1, 2) bei Standardbetrieb mit ersten Videoköpfen (K1) einer ersten Spaltbreite (wl) bei einer ersten Bandlängsgeschwindigkeit und bei Langzeitbetrieb mit zweiten Videoköpfen (K2) mit einer zweiten, geringeren Spaltbreite (w2) bei einer zweiten, geringeren Bandlängsgeschwindigkeit geschrieben und gelesen werden, **dadurch gekennzeichnet**, daß die Wiedergabe bei Standardbetrieb (Fig. 1) mit den zweiten Videoköpfen (K2) und bei Standardbetrieb (Fig. 1) während Sonderbetriebsarten wie Standbild, Suchlauf u. dgl. mit den ersten Videoköpfen (K1) erfolgt.

## Claims

1. A video recorder with standard-play and long-play operation, wherein in the case of standard-play operation the tracks (1,2) are recorded and read using first video heads (K1) with a first gap width (W1) at a first tape longitudinal speed and in the case of long-play operation are recorded and read using second video heads (K2) with a second, smaller gap width (W2) at a second, lower tape longitudinal speed, characterised in that playback takes place using the second video heads (K2) in the case of standard-play operation (Fig.l) and using the first video heads (K1) in the case of standard-play operation (Fig.1) during special operating modes such as picture-freeze, search and the like.

## Revendications

1. Magnétoscope avec mode standard et mode longue durée pour lequel les pistes (1, 2) sont enregistrées et lues, en mode standard, avec des premières pistes vidéo (K1) d'une première largeur d'entrefer (w1) pour une première vitesse longitudinale de bande et, en mode longue durée, avec des secondes têtes vidéo (K2) d'une seconde largeur d'entrefer (w2) pour une seconde vitesse longitudinale de bande plus faible, **caractérisé en ce** que la restitution en mode standard (fig. 1) se fait avec les secondes têtes vidéo (K2) et en mode standard (fig. 1) pendant les types de mode spéciaux comme arrêt sur image, recherche et équivalent avec les premières têtes vidéo (K1).
